# EUROPEAN PATENT APPLICATION

(11) **EP 4 518 193 A1**
(43) Date of publication of application: **05.03.2025**
(21) Application number: 24196648.0
(22) Date of filing: 27.08.2024
(51) Int. Cl.: H04B 10/073

(54) **MAPPING CONNECTIVITY OF OPTICAL FIBERS BETWEEN REMOTE LOCATIONS**

(30) Priority: 31.08.2023 US 202363579842 P
(71) Applicant: EXFO Inc., Québec, QC G1M 2K2 (CA)
(72) Inventor: PERRON, Stephane, Québec, G1M 2K2 (CA)
(74) Representative: Gregory, Alexandra Louise

(57) **Abstract**

Described herein are systems and methods for testing connectivity of strands (14, 18) of a fiber optic cable (12), the ends of which terminate at a first site (32) and a second site (34). A method (200), according to one implementation, includes the step of coordinating (202) the first and second sites (32, 34) to generate a signal at a first end of the strands (14) and to detect presence of the signal at a second end of the strands (18). The method (200) also includes receiving (204) confirmation information from the first and second sites (32, 34) pertaining to the signal being generated and detected. Also, the method (200) includes the steps of utilizing (206) the confirmation information to match the first end of the strands (14) with the second end of the strands (18) for determining fiber strand connectivity between the first site and the second site (32, 34) and then creating a connectivity map showing the fiber strand connectivity.

## Description

### CROSS-REFERENCE

The present disclosure claims priority to U.S. Provisional Patent Application No. 63/579,842, filed August 31, 2023, the contents of which are incorporated by reference in their entirety.

### TECHNICAL FIELD

The present disclosure generally relates to systems and tools for testing optical fiber cables. More particularly, the present disclosure relates to mapping connectivity of individual fiber strands of an optical fiber cable from one location to another.

### BACKGROUND

Generally, the importance of managing fiber optic cables in a data center, outside plant fiber, etc. can often be overlooked and under-appreciated. However, fiber optic cables that are not managed properly can cause a number of problems, such as service downtime, inefficiency, troubleshooting difficulty, etc. Therefore, it can be important for a network operator or administrator to manage cables at these data centers (or other centralized locations where network equipment is deployed). The management of fiber optic cable may include at least tracking, organizing, and identifying cables in an effective way to reduce various issues. As an example, some data centers may have thousands of optical fibers passing from the interior of the data center to the outside world. i.e., the outside plant fiber. Without proper management and recordation of each individual fiber, inefficiencies and downtime events may arise, particularly when maintenance is needed. For example, when the fibers are properly tracked, identified, and documented, it will generally be much easier and faster to perform maintenance services in response to network issues, as opposed to the headaches involved with the absence of cable organization or "spaghetti" cabling scenarios. There is also a notion of "as planned" versus "as built" and significant problems come from the fact that the build (i.e., actual implementation) is different from the plans. It is difficult to close the loop and correct inventory, record, etc. to detect deviations.

### BRIEF SUMMARY

The present disclosure is directed to systems and methods for testing connectivity of fiber strands of an optical fiber cable from one location to another. In one implementation, a server includes a processing device, an external interface configured for communication with an interface device at a first site and for communication with an interface device at a second site, and a memory device. The memory device is configured to store a fiber strand connectivity testing application configured to test a fiber optic cable running from the first site to the second site, the fiber optic cable having a plurality of strands. The fiber strand connectivity testing application has logical code for enabling the processing device to perform the steps of a) coordinating the first site and the second site to generate signals at a first end of the strands and to detect presence of the signals at a second end of the strands, b) receiving, via the external interface, confirmation information from the first site and the second site pertaining to the signals being generated and detected, c) utilizing the confirmation information to match the first end of the strands with the second end of the strands for determining fiber strand connectivity between the first site and the second site, and d) creating a connectivity map showing the fiber strand connectivity.

According to another implementation, a multi-port testing system includes an optical switch having a plurality of accessible terminations configured for connection with a first end of multiple strands of a fiber optic cable to be tested, a second end of the multiple strands of the fiber optic cable terminating at a remote location. The multi-port testing system further includes a test unit configured to cause the optical switch to switch among the multiple strands at the first end for testing connectivity. Also, the multi-port testing system includes an interface device configured to communicate with a server, wherein the server is configured to coordinate the test unit with a second test unit at the remote location to enable one of the test unit and the second test unit to generate signals at one end of the strands and to detect presence of the signals at the other end of the strands. The test unit is further configured to provide confirmation information to the server pertaining to the signals being generated or detected to enable the server to match the first end of the multiple strands with the second end of the multiple strands for determining fiber strand connectivity to create a connectivity map showing the fiber strand connectivity.

Furthermore, the present disclosure is directed to methods, wherein, according to one implementation, a method for testing fiber strand connectivity of a fiber optic cable running from a first site to a second site is provided, where the fiber optic cable has multiple strands terminating at the first and second sites. In this implementation, the method comprises the steps of coordinating the first and second sites to generate signals at a first end of the strands and to detect presence of the signals at a second end of the strands. Next, the method includes receiving confirmation information from the first and second sites pertaining to the signals being generated and detected. The method also includes the steps of utilizing the confirmation information to match the first end of the strands with the second end of the strands for determining fiber strand connectivity between the first site and the second site and then creating a connectivity map showing the fiber strand connectivity.

### BRIEF DESCRIPTION OF THE DRAWINGS

The present disclosure is illustrated and described herein with reference to the various drawings. Like reference numbers are used to denote like components/steps, as appropriate. Unless otherwise noted, components depicted in the drawings are not necessarily drawn to scale.
FIG. 1 is a schematic diagram illustrating a system for creating a connectivity map of optical fibers between two locations, according to one embodiment.
FIG. 2 is a schematic diagram illustrating a system for mapping optical connectivity between two locations where a technician is present at one location, according to one embodiment.
FIGS. 3A - 3C are diagrams illustrating the portable test apparatus shown in FIG. 2, according to various embodiments.
FIG. 4 is a schematic diagram illustrating a system for mapping optical connectivity between two locations in which a technician does not necessarily need to be present at either of the locations, according to one embodiment.
FIG. 5 is a flowchart illustrating a test procedure for creating a connectivity map involving a tone generating device, a tone receiving device, and a server, according to one embodiment.
FIG. 6 is a block diagram illustrating a computing device related to any of the server, test units, and portable test apparatuses shown in FIGS. 1 - 4, according to various embodiments.
FIG. 7 is a schematic diagram illustrating a system for mapping optical connectivity between several locations where a technician is present at one location, according to one embodiment.
FIG. 8 is a schematic diagram illustrating a system for mapping optical connectivity from a PON system to multiple drop terminals where a technician is present at one of the drop terminals, according to one embodiment.
FIG. 9 is a flowchart illustrating a method for testing a fiber optic cable running from a first site to a second site and for testing fiber strand connectivity of the fiber optic cable, according to one embodiment.

### DETAILED DESCRIPTION

The present disclosure relates to systems and methods for managing fiber optic cables within a network or sub-network. Not only is it important to organize and identify fiber optic cables at each individual location (or data center), but also it is important to maintain a connectivity map (or topology map) that shows the connections from one location to another. Since a network or sub-network may have thousands of fiber connections among a number of nodes, the overall management of these fiber optic cables can be complex. Nevertheless, the lack of an organized fiber management plan can result in service downtime, troubleshooting difficulties, failure of customer activation, etc.

Often, current testing methods for identifying fiber continuity may require a large amount of manual manipulation and often requires two technicians, where one will be stationed at a first end of the fiber optic cable (at one location) and the other will be stationed at a second end of the fiber optic cable (at another location). Generally, this can be accomplished using a red light testing device for short distances. For longer distances, the testing process may involve a tone generator (e.g., Remote Terminal Unit (RTU)) that emits a modulated tone light at one end and a tone detector that detects the signal at the other end. The technician at the first end will use the tester to inject light into one fiber at the first end, and then the technician at the opposite end will search for the fiber (or associated port) that carries this signal. When connectivity is detected, the technicians can document the circuit connections.

However, an issue with this strategy is that the manual mapping technique relies on the technicians to write down the results at their respective ends and then combine their results in order to archive the connectivity data. The embodiments of the present disclosure, however, are configured to automatically relay the connectivity information, as well as fiber identification information, to a centralized server, which can then coordinate the connectivity information from both ends and create a connectivity map (or topology map) and/or add to an existing connectivity map for documenting an up-to-date mapping of individual fiber connections.

One difference between the proposed solutions described here and the conventional strategies is the ability to quickly and efficiently uncover an otherwise unknown fiber mapping to build a topology database to be recorded in the fiber monitoring system. Part of the connectivity data that is provided to the server may further include geolocation information related to the geographical location of the ends of the fibers. For example, the geographical location may signify that the ends of the fibers are at a specific building or other location (e.g., data center), but may also provide even greater accuracy to pinpoint where the ends of the fibers are located within the building or data center. That is, more precise geographic information may locate the fiber ends within a room or even at a specific rack within the data center. Thus, the generated topology map not only provides connectivity information, but also can provide information regarding the precise location of terminations of each fiber strand.

The embodiments of the present disclosure are configured to automate the mapping of routes between the ends of a cable (note, some cables are point-to-point with two ends, and other cables can be point to multipoint, such as in Passive Optical Network (PON)). Furthermore, the systems are configured to automatically document and store the confirmed routes in a topology database. Also, the embodiment may include use cases with respect to the analysis or testing of metro loops. Since many operators may have issues with polarity and fiber swaps, the prevent embodiments are configured to leverage the fact that a Remote Fiber Testing and Monitoring (RFTM) test head can be connected to all fiber ends through an optical switch. The present embodiments may automate the mapping of circuits between the two ends of a fiber optic cable and furthermore can automatically document and store the circuits that are confirmed in a topology database.

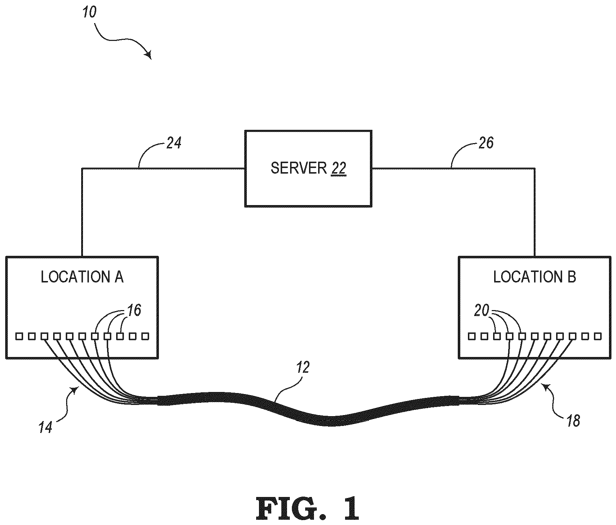

FIG. 1 is a schematic diagram illustrating an embodiment of a system 10 for creating a connectivity map of optical fibers between two locations. As shown, a cable 12 (or fiber optic cable) is arranged within a network between Location A and Location B. The cable 12 may include a plurality of optical fibers or strands within a protected sheath. A plurality of strands 14 or fiber strands at one end of the cable 12 extend out from the sheath and may be optically connected to any suitable type of accessible terminations 16 within Location A. For example, the accessible terminations 16 may be configured as ports, fiber connectors, ports of a patch panel, and/or other types of terminations where optical signals at this end can be tested and/or connected to network equipment within Location A. Similarly, a plurality of strands 18 at the other end of the cable 12 extend out from the sheath and may be optically connected to any suitable type of accessible terminations 20 within Location B. Note, as described herein, a connectivity map can include just a single link as well as multiple links. The term connectivity map is meant to include information that defines fiber strand connectivity.

In addition, the system 10 may include any suitable type of testing devices at each of Location A and Location B for testing the connectivity between the strands 14 at Location A and the corresponding strands 18 at Location B. Testing results from the two locations are passed to a server 22, which is configured to coordinate the testing procedures and map the connectivity information related to the cable 12. The server 22 may also map additional cables (not shown) between Location A and Location B as well as connectivity mapping between other locations, nodes, data centers, etc. within a network. The server 22 may also be configured to coordinate testing equipment at each location for testing of strands 16, 20. A first communication channel 24 is arranged between Location A and the server 22 and a second communication channel 26 is arranged between Location B and the server 22. The first and second communication channels 24, 26 may include any suitable type of wired and/or wireless communication protocols.

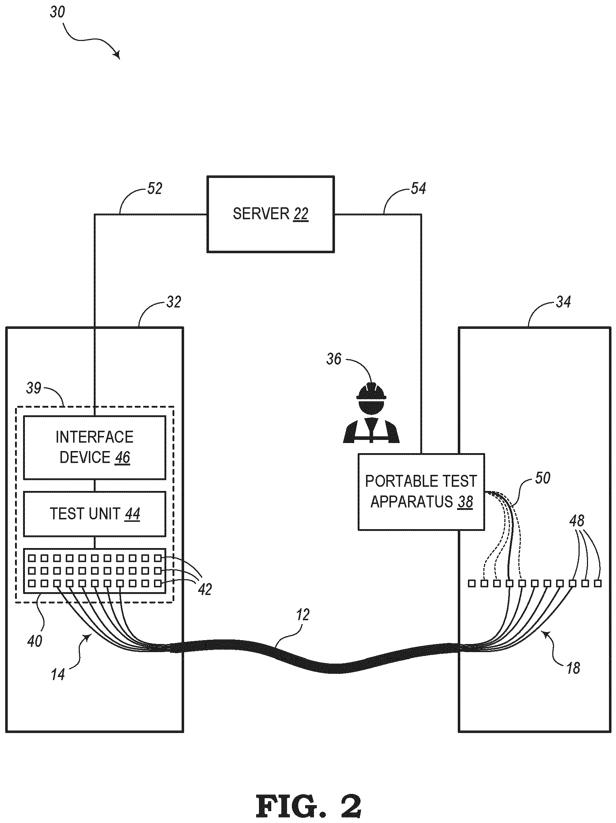

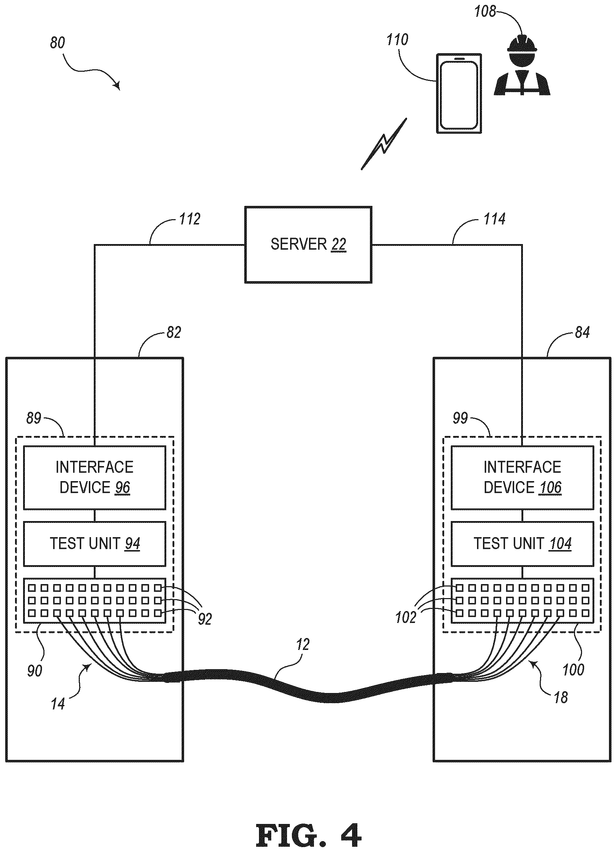

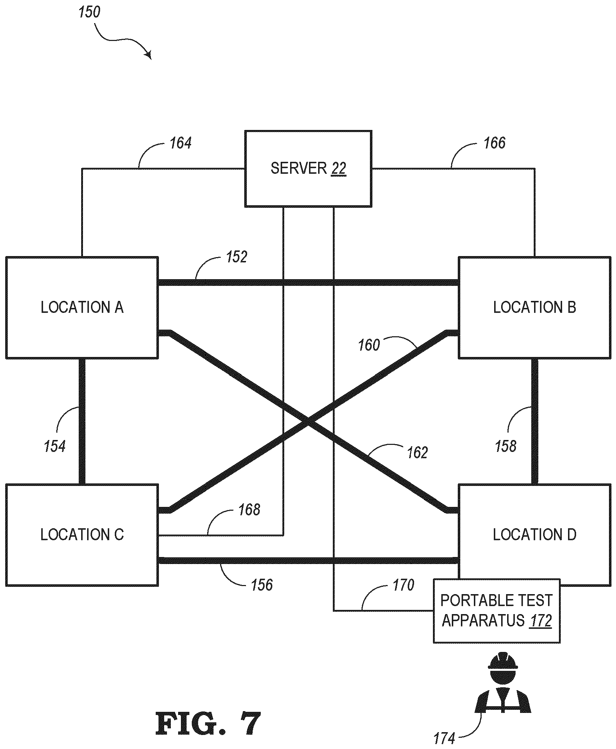

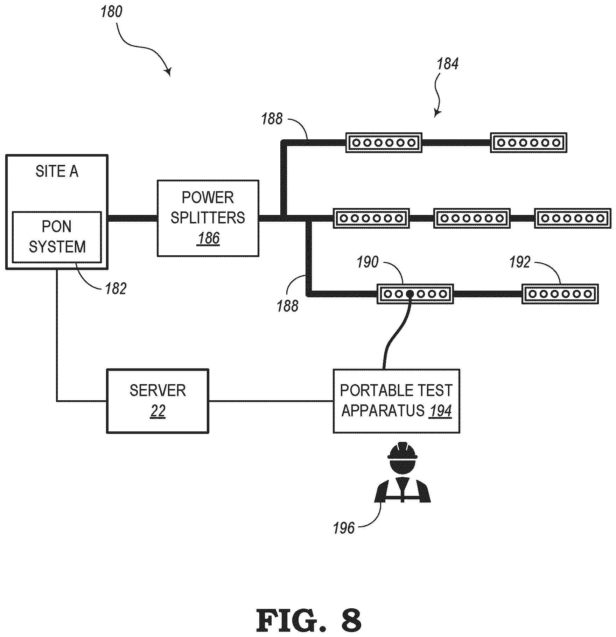

The testing at each location may include automatic or manual processes. For example, as shown in FIG. 2, a first location includes an automatic testing process while a second location includes a manual testing process (i.e., where a technician is present). As shown in FIG. 4, both locations include automatic testing processes. Other testing scenarios are also shown in FIGS. 7 and 8 that involve a technician.

Furthermore, each testing process, whether automatic or manual, may include three main features: 1) a switching procedure, 2) a connectivity detection procedure, and 3) a communication procedure. For example, the first feature related to the switching procedure can be used to select one strand 14, 18 among the accessible terminations 16, 20. In the manual process, the switching procedure may involve a technician manually connecting one fiber end (or accessible termination 16, 20) at a time to a tester. In the automatic process, this may involve an optical switch that can automatically switch to any one of the multiple fiber ends at a time.

The second feature related to the connectivity detection procedure, whether automatic or manual, involves a detection procedure to detect for connectivity. The detection procedure may include either applying a test signal (e.g., tone) to the fiber ends or accessible terminations 16, 20 at one end of the cable 12 or detecting a test signal or tone on the fiber ends or accessible terminations 16, 20 at the other end of the cable 12. For example, the server 22 may be configured to designate one location as the tone generating location and to designate the other location as the tone detecting location. Any of the automatic locations and manual locations can be designated as either tone generating or tone detecting locations. While detecting for connectivity, if connectivity is not detected at the detecting end, the switching procedure at the detecting end may include switching to another strand in order to allow this next strand to be detected for connectivity, and so on, until connectivity is eventually detected. In some embodiments, the signals or test signals can be referred to as a "tone" signal. "Tone" can refer to a sinusoidal signal at a single frequency. Those skilled in the art will recognize the signals, test signals, or tone signals can be any specifically modulated optical signal.

The third feature related to the communication procedure, whether automatic or manual, involves communicating the connectivity confirmation results to the server 22. Information that can be communicated to the server 22 may include indicating when a tone was either applied to or detected on each fiber, an identification of each fiber (e.g., color code, port number, terminal identifier, identification of a particular accessible termination 16, 20, etc.), geolocation information regarding the fiber end, etc. Upon receiving this information regarding the strands 14 at Location A and strands 18 at Location B, the server is configured to organize and document the confirmed connectivity information and create a topology map and/or add to an existing topology map.

FIG. 2 is a schematic diagram illustrating a system 30 for mapping optical connectivity between a first site 32 and a second site 34. In this embodiment a technician 36 is present at the second site 34. In some embodiments, each of the first site 32 and second site 34 may represent a rack, a rack unit, a shelf, or other types of support structure units for housing network equipment within a data center or other network site. The technician 36 may use a portable test apparatus 38 for manually testing the strands 18 at the second end of the cable 12. The testing scenario as shown in FIG. 2 may represent a semi-automatic mapping process.

At the first site 32, a multi-port testing system 39 is deployed. In the illustrated embodiment, the multi-port testing system 39 includes an optical switch 40 (having a plurality of accessible terminations 42), a test unit 44, and an interface device 46. In some embodiments, the optical switch 40, the test unit 44, and/or the interface device may be combined in a single device. Those skilled in the art will recognize various embodiments are contemplated. The optical switch 40 and test unit 44 are configured to emit an optical tone signal into optical fibers of cable 12 one at a time. At the second site 34, the technician 36 can use the portable test apparatus 38 to detect the optical tone signal on one of a plurality of accessible terminations 48 connected to the strands 18. Detecting the optical tone may include the technician 36 connecting an input component 50 from each of the accessible terminations 48 to an input of the portable test apparatus 38, one strand 18 at a time. portable test apparatus 38 can instruct the technician 36 when connectivity is detected and can further be configured to automatically notify the server 22 that connectivity has been detected on a particular strand 18 that is identified as being connected to a particular accessible termination 48. Also, the geolocation of the portable test apparatus 38 can be communicated to the server 22.

With this information, the server 22 can record the discovered fiber mapping in a topology database. Furthermore, the server 22 can communicate with the test unit 44 via the interface device 46 to match up the fiber end or strand 18 at the second site 34 with the corresponding strand 14 at the first site 32. The confirmed connectivity mapping along with the geolocation information can be stored in a database and used for creating, adding to, and/or modifying a topology map of the network.

In another embodiment, and possibly a preferred embodiment with respect to scenarios when there is a hybrid or semi-automatic connectivity testing process between two location (i.e., manual testing at one end and automatic testing at the other), the second site 34 (i.e., where the technician 36 is operating) may be configured as the tone generating end and the other end (i.e., the first site 32) is configured as the tone detecting end. That is, it may be easier and faster for the optical switch 40 at the first site 32 to switch among accessible terminations 42 than what is possible for the technician 36, particularly since many more switching actions will normally be needed at the detection end. Note, it is faster due to the fact that the receiver can scan all ports without the need to sync with the generator. The switching time is the same, but the detection is faster and simpler.

Thus, the input component 50 of the portable test apparatus 38 may be configured to be connected to a first accessible termination 48 while the test unit 44 and optical switch 40 run through the multiple strands 14 one at a time until continuity is detected. The connectivity information can be communicated to the server 22 via the interface device 46 and a first communication channel 52 to the server 22, which, in turn, can communicate to the portable test apparatus 38 via a second communication channel 54 that connectivity has been confirmed. Upon receiving confirmation, the portable test apparatus 38 can inform the technician 36 that connectivity has been detected and the input component 50 can be connected to the next accessible termination 48. This process can be repeated for each strand 18 or accessible terminations 48 until all have been tested. Again, the server 22, upon receiving connectivity information from both locations via the communication channels 52, 54, can create or modify the connectivity map and add pertinent geolocation information to identify the strands 14, 18 as well as the locations 32, 34.

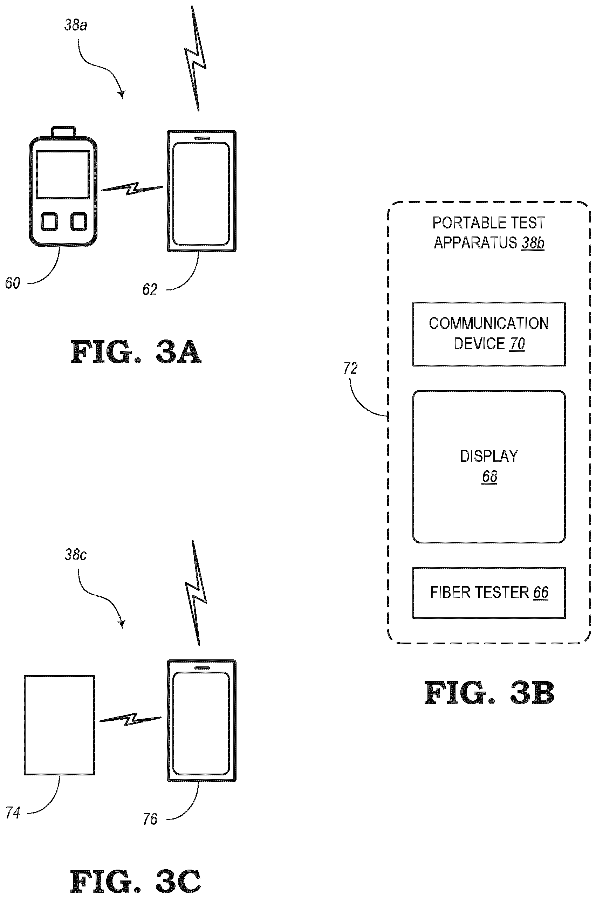

FIGS. 3A - 3C are diagrams illustrating three embodiments of the portable test apparatus 38 shown in FIG. 2, where a first embodiment of a portable test apparatus 38a is shown in FIG. 3A, a second embodiment of a portable test apparatus 38b is shown in FIG. 3B, and a third embodiment of a portable test apparatus 38c is shown in FIG. 3C. Any of the portable test apparatuses 38a, 38b, 38c, or others, can be used in the various scenarios in which a technician (e.g., technician 38) is onsite to perform continuity testing at a specific location or site.

As shown in FIG. 3A, the portable test apparatus 38a includes a fiber testing device 60 and a mobile device 62 (e.g., smartphone, laptop computer, tablet, etc.). The fiber testing device 60 may be configured to locally supply an optical tone to an end of a fiber and/or to locally detect an optical tone that has been supplied on a corresponding fiber at the other end of the fiber. Note, it is also possible to have no communication between the fiber testing device 60 and the mobile device 62 when the fiber testing device 60 is the signal source. It's the user that will turn on the light source (and trigger test on smartphone). The fiber testing device 60 may include a display, in some embodiments, which can assist the technician 36 with testing. Alternatively, the mobile device 62 may include an application that is configured to instruct the technician 36 about the various steps of the fiber connectivity tests. For example, the application may be configured to instruct the technician 36 when a connectivity at both ends of the cable 12 has been confirmed and/or when connection to another fiber is needed for additional testing. The mobile device 62 may be configured to communicate with the server to coordinate testing procedures and to pass along testing results.

As shown in FIG. 3B, the portable test apparatus 38b may include a fiber tester 66, a display 68, and a communication device 70, which may all be arranged in a single housing 72. Thus, the portable test apparatus 38b may have connection and/or switching capabilities for connection to the end or ends of the fiber strands. The fiber tester 66 can then test each strand individually to detect connectivity, such as by applying an optical tone thereto and receiving confirmation that the fiber on the other end has been detected or by detecting an optical tone received from the other end. Results of testing can be displayed on the display 68, which may include a screen, LEDs, etc. for indicating various test conditions. Also, the display 68 can provide instructions in any suitable form to the technician 36 regarding the testing procedures. When connectivity is confirmed, the communication device 70 may be configured to communicate test results to the server 22. Also, testing procedures that are coordinated by the server 22 can be communicated to the portable test apparatus 38b via the communication device 70. For example, the communication device 70 may include any suitable communication protocols, such as cellular, Wi-Fi, Bluetooth, Ethernet, etc.

As shown in FIG. 3C, the portable test apparatus 38c may include a passive optical device 74 and a mobile device 76 (e.g., smartphone, laptop computer, tablet, etc.). This embodiment may be used in a scenario in which the testing unit 44 at the first site 32 is configured as an Optical Time-Domain Reflectometry (OTDR) device and the passive optical device 74 may simply provide a termination for reflecting the OTDR signals, such as with a specific pattern (e.g., patterns that are easily identified). The mobile device 76 may be configured, again, to communicate test results and connectivity information to the server 22.

Referring again to FIG. 2, the system 30 can be used in a semi-automatic mapping scenario. The cable 12 containing multiple fibers is connected at the first site 32 to the multi-port testing system 39, which may include the optical switch 40 and the test unit 44. Many or all of the strands 14 (or fibers) of the cable 12 at the first site 32 are connected to the optical switch 40 (e.g., via the accessible terminations 42). The technician 36 at the second site 34 is equipped with the portable test apparatus 38 or optical test device with communication capability over the network via the second communication channel 54. In some embodiments, the portable test apparatus 38 may include an optical test unit in wireless (e.g., Bluetooth) communication with a mobile device (e.g., smartphone). The smartphone may be configured to relay test information from the optical test unit to the server 22 via the second communication channel 54. In other embodiments, the smartphone may be configured to communicate directly with the multi-port testing system 39 at the first site 32 to coordinate testing operations, while, in still other embodiments, the server 22 may support communication and coordination between the portable test apparatus 38 and the multi-port testing system 39.

In one implementation, the test unit 44 is an optical source emitting a specific modulated optical signal. The portable test apparatus 38 may include a test unit or power meter capable of detecting the specific modulated optical signal. The technician 36 can connect the portable test apparatus 38 to one fiber at a time. It may be noted that the strands 18 of fiber at the second site 34 may have identifiers (e.g., color coded sheathing, port number identification, termination identification, etc.) that can be documented in an application running on the server 22, multi-port testing system 39, and/or portable test apparatus 38 and properly linked to the cable 12 under test. From the portable test apparatus 38, the technician 36 selects the fiber where the fiber tester 60, 66 or passive optical device 74 is connected and launches a mapping test. A program (e.g., orchestrator) implemented in any or all of the server 22, portable test apparatus 38, and/or multi-port testing system 39 may sequentially order injection of the modulated optical signal in each fibers of the cable 12 through the optical switch 40 or accessible termination 48. At each fiber, when the test unit 44 or portable test apparatus 38 confirms a signal is currently emitted, the orchestrator will verify if the signal is received on the opposite end (e.g., at the portable test apparatus 38 or test unit 44) through the communication channels 52, 54. If no signal is detected, the orchestrator will inject the signal in the next fiber and the connectivity detection is tested again. When the signal is eventually detected (assuming there are no faults in the cable 12), the mapping is confirmed, and the correspondence is confirmed between the selected fiber identifiers. The mapping is recorded in the topology database of the server 22. Alternatively, the mapping could also be recorded locally in a database at each of the sites 32, 34. The orchestrator application may be configured to show a report of the mapping of the fibers at a specific terminal or display at the two sites 32, 34.

A second implementation reverses the signal source and detection functions. The test unit 44 may be configured as a power meter able to detect a specific optical signal applied to the fibers by the portable test apparatus 38. The portable test apparatus 38 generates the specific modulated optical signal. The technician 36 connects the input component of the portable test apparatus 38 to the specific port or accessible termination 48 to be mapped, selects this port in the portable test apparatus 38, and then launches the mapping test. The orchestrator application can send a request to the test unit 44 to instruct the optical switch 40 to scan some or all of the ports or accessible terminations 42 related to the strands 14. The scan will sequentially try to detect the specific modulated optical signal in each port. In addition, the geolocation of the portable test apparatus 38 and the test unit 44 can be recorded with test results to log and confirm the circuit terminations on the map.

FIG. 4 is a schematic diagram illustrating a system 80 for mapping optical connectivity between a first location 82 (e.g., node, data center, network site, etc.) and a second location 84 (e.g., node, data center, network site, etc.). In this arrangement, the system does not necessarily need a technician to be present at either of the locations 82, 84. At the first location 82, a multi-port testing system 89 is deployed. In the illustrated embodiment, the multi-port testing system 89 includes an optical switch 90 (having a plurality of accessible terminations 92), a test unit 94, and an interface device 96. In some embodiments, the optical switch 90 and the test unit 94 may be combined in a single device. The optical switch 90 and test unit 94 are configured to emit an optical tone signal into optical fibers of cable 12 one at a time. At the second location 84, a multi-port testing system 99 is deployed. In the illustrated embodiment, the multi-port testing system 99 includes an optical switch 100 (having a plurality of accessible terminations 102), a test unit 104, and an interface device 106. In some embodiments, the optical switch 100 and the test unit 104 may be combined in a single device. The optical switch 100 and the test unit 104 are configured to emit an optical tone signal into optical fibers of cable 12 one at a time.

Thus, this testing scenario may be referred to as a full-automatic mapping arrangement, where both ends can implement the fiber testing automatically. One end is configured to emit a tone signal on the fiber ends, while the other end is configured to attempt to detect the emitted tone signals from the fiber ends. The fiber mapping results can be saved in a topology database on the server 22.

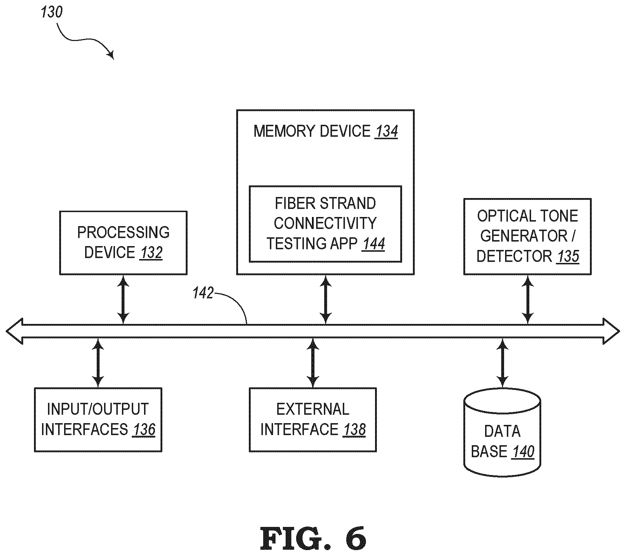

In some embodiments, a technician 108 may utilize a mobile device 110 (e.g., smartphone, cellular phone, laptop device, tablet computer, etc.) to instruct the server 22 to initiate a test. The mobile device 110 may be positioned any place where wireless service is available. In response to receiving the initiation signal, the server is configured to implement the fiber connectivity test on the cable 12 between the two locations 82, 84. An orchestrator or controller application may be configured within the server 22, the multi-port testing system 89, the multi-port testing system 99, and/or the mobile device 110. The orchestrator in this embodiment may be fiber connectivity testing application, such as the fiber strand connectivity testing application 144 shown in FIG. 6.

When a mapping test is launched between the locations 82, 84, the orchestrator can request the generating unit to inject the specific modulated optical signal in a first mapped port of the optical switch 90, 100. Upon confirmation by the signal has been injected in the fiber, the orchestrator requests the test unit 104, 94 on the opposite end to perform a scanning operation to switch through the strands, 18, 14 and determine when the signal is received. Once the signal is found, the mapping between the ports of the optical switches 90, 100 is recorded in the topology database of server 22, or locally saved to memory in one of the test units 94, 104. Then the orchestrator is configured to request that the optical switch 90, 100 of the generating device move to the next fiber to map and launch again a port scan.

In some embodiments, when a test procedure is conducted, a list of available fiber ends, ports, or accessible terminations 92, 102 may be recorded. Then, when matching ports are detected, the list can be updated by removing the matched port for the remainder of the test procedure. In that way, testing is not repeated for the ports that have already been matched with corresponding ports on the other end. By removing these ports, the test procedure will not need to scan them again in the current test procedure, which will skip the scanning of already matched ports and speed up the scanning process. When all the fibers are tested, the application can show a report of the mapping of all the fibers.

In addition, the geolocation of the test units 94, 104 can be recorded with test results to log and confirm the circuit terminations on a map. In some implementations, the test units 94, 104 can be OTDR devices with the specific modulated optical signal emission and detection capabilities.

Optionally, the ports or accessible terminations 92, 102 of the optical switches 90, 100 and the test units 94, 104 can be linked to patch panel ports used as terminals on both cable ends. Then the recorded mapping in the topology database will then represent continuity between two ports available to connect data transmission devices instead of linking test device port to fiber strands identifiers.

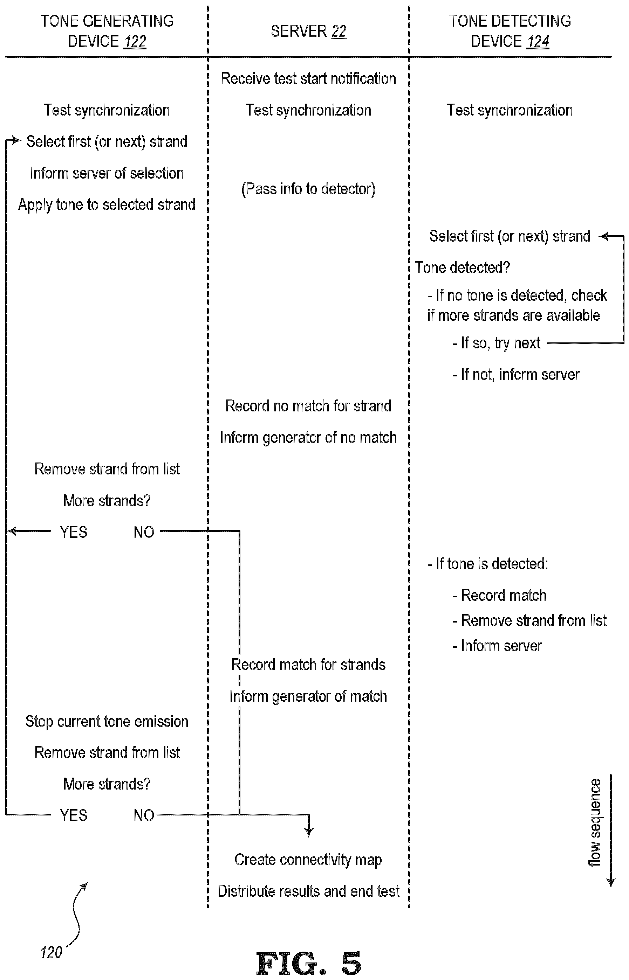

FIG. 5 is a flowchart illustrating an embodiment of a test procedure 120 for creating a connectivity map involving a tone generating device 122, a tone detecting device 124, and a server 126 (e.g., server 22). For example, depending on which side is designated as the generating end, the tone generating device 122 may represent the test unit 44 or portable test apparatus 38 (with the fiber tester 60, 66) with respect to FIG. 2 or the test units 94, 104 with respect to FIG. 4. Also, the tone detecting device 124 may represent the test unit 44 or portable test apparatus 38 (with the fiber tester 60, 66 or passive optical device 74) with respect to FIG. 4 or the test units 94, 104 with respect to FIG. 4. The flow sequence of FIG. 5 proceeds from the top down.

As shown, the test procedure 120 includes the server 126 receiving a test start notification, where a technician provides a start signal to initiate the fiber connectivity test. Next, the server 126 is configured to perform a test set or synchronization process for instructing the tone generating device 122 and tone detecting device 124 about their respective roles. The synchronization may also include the tone generating device 122 and tone detecting device 124 both sending signals to the server 126 including their respective geolocations or Global Positioning System (GPS) coordinates. Also, any one or more of the three components may be configured with the orchestration programs mentioned in the present disclosure for managing the various processes. Note, in an embodiment, the test procedure 120 describes a full automation of the system 80, when a tone is emitted from the remote unit to a portable tone detector. Otherwise, there is no Test Sync on tone generating device when this device is the portable unit

Next, the tone generating device 122 is configured to select a first strand (from a list of available strands). Again, this might be a manual or automatic step, depending on the test scenario. The tone generating device 122 may also inform the server 126 about the selection and when the tone is being transmitted. In some embodiments, the server 126 may inform the tone detecting device 124 that the tone is coming soon. Then, the tone generating device 122 is configured to apply the tone to the selected first strand.

Then, the tone detecting device 124 is configured select a first strand (from a list of available strands) and detect if the tone is detected. If no tone is detected, it is determined whether or not there are additional strands that are available and need to be checked. If so, the tone detecting device 124 selects the next strand (from the list of available strands) and detects for the presence of the transmitted tone. If no tone is detected on the available strands, the tone detecting device 124 informs the server 126 that no tone was detected on any strand. In this case, the server 126 is configured to record that there is no match for this strand selected by the tone generating device 122. The server 126 may then inform the tone generating device 122 that there was no match. The tone generating device 122 removes the non-matching strand from the list of available strands and determines if more strands are to be tested. If so, the test procedure 120 returns back to allow the tone generating device 122 to select the next strand for testing. However, if no more strands are available for testing, the test procedure 120 jumps to the end, which includes the server 126 using the received connectivity test information obtained from both ends to create a connectivity map. The map can be distributed to the end devices and the test procedure 120 ends.

Otherwise, if the tone detecting device 124 determines that a tone has been detected, the test procedure 120 includes the tone detecting device 124 recording the match, removing the match strand from the list, and informing the server 126 of the match. The server 126 is then configured to also record the match of the identified strands on both ends (along with the location information), and then informs the tone generating device 122 of the match. At this point, the tone generating device 122 is configured to stop the current tone emission, which has just been matched, remove this strand from the list of strands that need to be tested, and checks to see if more strands are still available for testing. If so, the test procedure 120 jumps back up to the step where the tone generating device 122 selects the next strand and then repeats the test for that strand. When no more strands are to be tested, the server 126 is configured to create the connectivity map, distribute the map, and end the test. Note, in some embodiments, it is not necessary to stop tone emission before end of mapping session, simply switch tone to another port.

FIG. 6 is a block diagram illustrating a computing device 130 representing any of the multi-port test systems 39, 89, 99, portable test apparatus 38, 38a, 38b, 38c, tone generating device 122, tone detecting device 124, and/or server 22, 126 described in the present disclosure, according to various embodiments. In the illustrated embodiment, the 130 may be a digital computing device that generally includes a processing device 132, a memory device 134, and optical tone generator/detector 135, Input/Output (I/O) interfaces 136, an external interface 138, and a database 140. It should be appreciated that FIG. 6 depicts the computing device 130 in a simplified manner, where some embodiments may include additional components and suitably configured processing logic to support known or conventional operating features. The components (i.e., 132, 134, 135, 136, 138, 140) may be communicatively coupled via a local interface 142. The local interface 142 may include, for example, one or more buses or other wired or wireless connections. The local interface 142 may also include controllers, buffers, caches, drivers, repeaters, receivers, among other elements, to enable communication. Further, the local interface 142 may include address, control, and/or data connections to enable appropriate communications among the components 132, 134, 135, 136, 138, 140.

Moreover, the computing device 130 includes a fiber strand connectivity testing application 144, which may be implemented in any suitable form of hardware in the processing device 132 and/or software or firmware in the memory device 134. The fiber strand connectivity testing application 144 may include computing logic, computer code, programs, instructions, etc. for enabling the processing device 132 to perform certain functionality. The I/O interfaces 136 may include display screens for showing results to a technician, providing instructions to the technician, and receiving input from the technician. The external interface 138 may include wired or wireless communication capabilities for enabling the communication as described in the present disclosure. The optical tone generator/detector 135 is configured for generating a tone signal to be applied to one end of fibers being tested and/or for detecting a tone signal applied at the opposite end. The databased 140 may be configured to store results of the connectivity tests, store connectivity maps, topology maps, connectivity results, location information, etc. As described herein, "fiber strand connectivity" means there is a light path defined between two ports in the connectivity map (connecting the terminations 16, 18, 42, 48, etc.).

It will be appreciated that some embodiments described herein may include or utilize one or more generic or specialized processors ("one or more processors") such as microprocessors; Central Processing Units (CPUs); Digital Signal Processors (DSPs): customized processors such as Network Processors (NPs) or Network Processing Units (NPUs), Graphics Processing Units (GPUs), or the like; Field-Programmable Gate Arrays (FPGAs); and the like along with unique stored program instructions (including both software and firmware) for control thereof to implement, in conjunction with certain non-processor circuits, some, most, or all of the functions of the methods and/or systems described herein. Alternatively, some or all functions may be implemented by a state machine that has no stored program instructions, or in one or more Application-Specific Integrated Circuits (ASICs), in which each function or some combinations of certain of the functions are implemented as custom logic or circuitry. Of course, a combination of the aforementioned approaches may be used. For some of the embodiments described herein, a corresponding device in hardware and optionally with software, firmware, and a combination thereof can be referred to as "circuitry configured to," "logic configured to," etc. perform a set of operations, steps, methods, processes, algorithms, functions, techniques, etc. on digital and/or analog signals as described herein for the various embodiments.

Moreover, some embodiments may include a non-transitory computer-readable medium having instructions stored thereon for programming a computer, server, appliance, device, at least one processor, circuit/circuitry, etc. to perform functions as described and claimed herein. Examples of such non-transitory computer-readable medium include, but are not limited to, a hard disk, an optical storage device, a magnetic storage device, a Read-Only Memory (ROM), a Programmable ROM (PROM), an Erasable PROM (EPROM), an Electrically EPROM (EEPROM), Flash memory, and the like. When stored in the non-transitory computer-readable medium, software can include instructions executable by one or more processors (e.g., any type of programmable circuitry or logic) that, in response to such execution, cause the one or more processors to perform a set of operations, steps, methods, processes, algorithms, functions, techniques, etc. as described herein for the various embodiments.

FIG. 7 is a schematic diagram illustrating an embodiment of a system 150 for mapping optical connectivity between several locations where a technician is present at one location. As shown in this figure, the system 150 includes Location A, Location B, Location C, and Location D, where the technician 174 is operating at Location D. A cable 152 (e.g., fiber optic cable) having multiple fiber strands is arranged between Location A and Location B. Another cable 154 having multiple strands is arranged between Location A and Location C. Cable 156 is arranged between Locations C and D; cable 158 is arranged between Locations B and D; cable 160 is arranged between Locations B and C; and cable 162 is arranged between Locations A and D. It should be noted that in some embodiments each cable 152, 154, 156, 158, 160, 162 may also represent multiple cables having multiple fiber strands. Also, the system 150 includes a first communication channel 164 between Location A and the server 22, a second communication channel 166 between Location B and the server 22, and a third communication channel 168 between Location C and the server 22. Also, a fourth communication channel 170 is arranged between a portable test apparatus 172 (at Location D) and the server 22. The technician 174 is configured to operate the portable test apparatus 172, which may be configured the same as or similar to the portable test apparatus 38 described above.

The functionality of fiber connectivity testing procedures with respect to FIG. 7 may be the same or similar to the fiber tests described throughout the present disclosure. For example, the portable test apparatus 172 may be configured as a tone generating device (e.g., tone generating device 122 described with respect to FIG. 5) and the other Locations A, B, and C may include tone detecting devices for scanning available fibers to determine if and when a generated tone is detected. Test results can be supplied to the server 22, which may then create a connectivity map.

Thus, with multiple sites being tested in this embodiment, the connectivity map may be a bit more complex. Again, location or geolocation information may be obtained from each location or from the portable test apparatus 172 with respect to Location D.

The same strategy applies to this more complex system 150. Each site may include an orchestration tool (e.g., fiber strand connectivity testing application 144) to assist with mapping specific ports to any of the other sites. For instance, a specific modulated optical signal may be injected in one port of a patch panel or other accessible termination in Location D, and the orchestrator can launch concurrent scans on optical devices at the other sites to detect the destination of that signal.

The orchestrator can also automate the detection of all optical paths between selected sites when they are equipped with a multiport test device (e.g., multi-port testing system 39, 89, 99) connected to some or all of the strands or fiber ends. One multiport test device may inject a specific modulated optical signal, while the other sites may scan their ports to detect this signal. Also, as mentioned above, the two ports identified to a light path will not need to be scanned again in the current mapping session. Thus, as light paths are discovered, the speed of the test will naturally increase since fewer ports will need to be scanned.

FIG. 8 is a schematic diagram illustrating another embodiment of a system 180 for mapping optical connectivity. In this embodiment, Site A includes a Passive Optical Network (PON) system 182 connected to multiple drop terminals 184. Site A is connected to the multiple drop terminals 184 via one or more power splitters 186 and multiple cables 188. First and second drop terminals 190, 192 are arranged along one of the cables 188, and a portable test apparatus 194 is configured for testing the first drop terminal 190. A technician 196 is present at the first drop terminal 190 for testing this component.

Therefore, FIG. 8 shows another test scenario in which a PON system (e.g., PON system 182) is employed in a point-to-multipoint network. One PON port of the PON system 182 is configured to feed the one or more power splitters 186 that in turn feeds multiple drop terminals 184. It may be common that fibers coming out of the power splitters 186 are not spliced correctly with respect to the cables 188, which can result in incorrect mapping of drop terminals ports to PON ports.

The assignment of drop terminal ports to the correct PON is important in customer activation phases. An Optical Network Terminal (ONT) that will be linked to a drop terminal port may be authorized on a specific PON circuit to avoid non-legit access to the system.

The PON system 182 may be connected to a terminal port and can be found using the same method as the scenario described with respect to FIG. 2. The circuits of the PON system 182 may be mapped to a multiport test system at Site A. The technician 196 may connect the portable test apparatus 194 to the port to be mapped to inject a specific modulated optical signal. A control device (e.g., application on a mobile device) of the portable test apparatus 194 may be configured to select the terminal port in the control device and then launch a mapping test. The orchestrator (e.g., fiber strand connectivity testing application 144) on any of the test devices can send a request to a test device at Site A to scan all ports or a subset of ports that are mapped to the PON system 182. The scan will sequentially try to detect the specific modulated optical signal in each port or subset of ports of the multiple port test device.

When the PON system 182 is active and the Optical Line Terminals (OLTs) are connected to the PON circuits in the PON system 182, the multiple port test device at Site A can be connected to the PON circuits using a three-port wavelength division module. In this scenario, the specific modulated optical signal may be at a different wavelength than the PON signals.

According to an additional testing scenario, a procedure may include searching for a passive device with OTDR. For example, with respect to FIG. 2 where the portable test apparatus 38c of FIG. 3C is utilized (i.e., with passive optical device 74 and mobile device 76), a different method for port mapping may be considered. In this scenario, the test process includes scanning multiple fibers with a fast OTDR acquisition to find a specific reflectance pattern. The specific reflective pattern may be more robust than a single reflector. It also does not need a reference on each fiber to detect a single new reflectance. The pattern is sufficiently unique to avoid false detection from natural link events. This test can be used in point to point (P2P) or PON networks.

In this implementation, the optical test device (e.g., test unit 44) may be configured as an OTDR device that launches a fast acquisition to detect the specific reflective pattern of the passive optical device 74. The technician 36 or operator connects the passive optical device 74 to one fiber of the cable 12. All the fibers ending at the second site 34 have identifiers that are named in the application on mobile device 76 (configured as a control device) and are linked to the cable 12 under test in the server 22. From the control device, the operator selects the fiber where the passive optical device 74 is connected and launches a mapping test. An orchestrator implemented in one of the devices 22, 38, 39 can sequentially order an OTDR test and the passive optical device 74 detects reflections in each fibers of the cable 12 through the optical switch 40. When the passive optical device 74 is detected, the mapping is confirmed and the correspondence between the selected fiber identifier of site 32 and the optical port 42 of the optical switch 40. The mapping is recorded in the topology database of the server 22. Alternatively, the mapping could also be recorded locally in devices 38, 39. The operator will move the portable test apparatus 38 to the next fiber to test this fiber. The application in the mobile device 76 in this example can show a report of the mapping of all fibers in a specific terminal.

The passive optical device 74, in some embodiments, can be built with three reflectances with specific relative levels. The reflectance strength and spacing may be designed for a given range of applications in terms of distance and loss, considering OTDR specifications. This scenario may have multiple entry ports through an unbalanced coupler, to support a greater range of link loss.

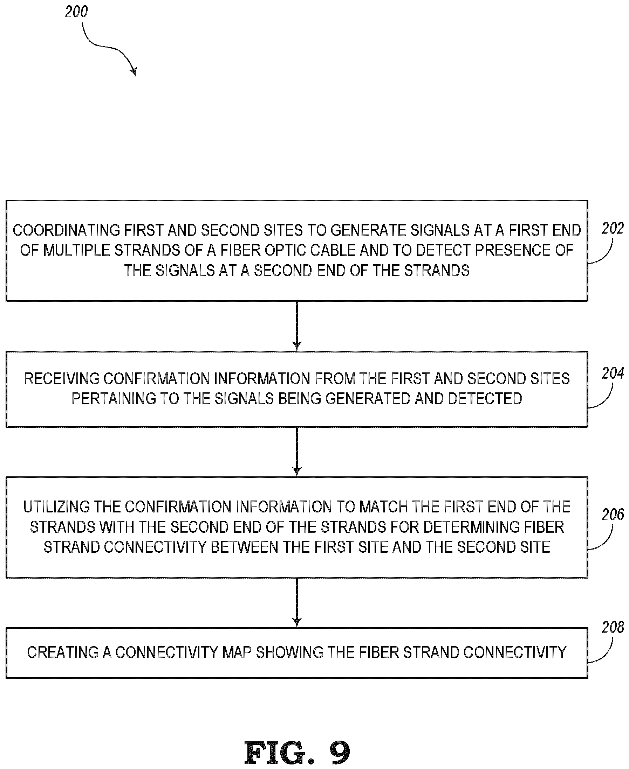

FIG. 9 is a flowchart illustrating an embodiment of a method 200 for testing a fiber optic cable running from a first site to a second site and for testing fiber strand connectivity of the fiber optic cable, wherein the fiber optic cable has multiple strands terminating at the first and second sites. As shown in FIG. 9, the method 200 in this embodiment includes the step of coordinating the first and second sites to generate signals at a first end of the strands and to detect presence of the signals at a second end of the strands, as indicated in block 202. The method 200 further includes the step of receiving confirmation information from the first and second sites pertaining to the signals being generated and detected, as indicated in block 204. Next, the method 200 includes utilizing the confirmation information to match the first end of the strands with the second end of the strands for determining fiber strand connectivity between the first site and the second site, as indicated in block 206. Also, the method 200 includes the step of creating a connectivity map showing the fiber strand connectivity, as indicated in block 208.

In some embodiments, the method 200 may further include the steps of a) instructing the first site to inject the signals onto a selected strand at the first end, and b) instructing the second site to scan a list of available strands at the second end and reply with a notification when the signals are detected on one of the available strands. Upon receiving the notification from the second end, the method 200 may include c) informing the first site to stop injecting the signal onto the selected strand and start injecting the signals onto a next strand, and d) instructing the second site to scan the list of available strands at the second end and reply with a notification when the signals are detected on another one of the available strands. Also, in some embodiments, the method 200 may further comprise the steps of a) receiving geolocation information from each of the first and second sites, and b) incorporating the geolocation information into the connectivity map.

Therefore, according to some implementations, the server 22 may comprise a processing device (e.g., processing device 132) and an external interface (e.g., external interface 138) configured for communication with an interface device at a first site and for communication with an interface device at a second site. The server 22 may also comprise a memory device (e.g., memory device 134) configured to store a fiber strand connectivity testing application 144 configured to test a fiber optic cable (e.g., cable 12) running from the first site to the second site, where the fiber optic cable has a plurality of strands.

The method 200 may also be associated in particular with the server 22 for executing a fiber test according to the fiber strand connectivity testing application 144, which may be configured with logical code for enabling the processing device 132 to perform the following steps. Again, the server 22 may be configured to coordinate the first site and the second site to generate signals at a first end of the strands and to detect presence of the signals at a second end of the strands (block 202). Using the external interface, the server may be configured to receive confirmation information from the first site and the second site pertaining to the signals being generated and detected (block 204). Furthermore, the server 22 can be configured to utilize the confirmation information to match the first end of the strands with the second end of the strands for determining fiber strand connectivity between the first site and the second site (block 206). Also, the server 22 is configured to create a connectivity map showing the fiber strand connectivity (block 208). Note, the method 200 is described with reference to two sites and those skilled in the art will recognize this can apply to multiple locations. Here, the second site would be multiple second sites and each can try to detect the signal simultaneously.

According to additional embodiments, the first end of the strands may include a first set of accessible terminations 14 and the second end of the strands may include a second set of accessible terminations 18. The first and second sets of accessible terminations 14, 18 may include ports, fiber connectors, and/or patch panel ports. The method 210 may further enable the processing device 132 to receive, via the external interface 138, identity information regarding an identification of each of the first and second sets of accessible terminations.

The server 22 may further be configured to a) instruct the first site to inject the signals onto a selected strand at the first end, and b) instruct the second site to scan a list of available strands at the second end and reply with a notification when the signals are detected on one of the available strands. Additionally, upon receiving the notification from the second end, the server 22 may c) inform the first site to stop injecting the signal onto the selected strand and start injecting the signals onto a next strand, and d) instruct the second site to scan the list of available strands at the second end and reply with a notification when the signals are detected on another one of the available strands.

The server 22 may also include a) receiving geolocation information from each of the first site and second site and b) incorporating the geolocation information into the connectivity map. In some embodiments, the first site may receive assistance from a technician and the second site may be configured not to receive assistance from a technician. In other embodiments, neither the first site nor the second site receives assistance from a technician, wherein, in this case, the server 22 may be configured to receive a test initiation request from a remote technician to initiate a fiber strand connectivity test between the first site and the second site.

Furthermore, some embodiments may be related to systems and methods that may be related to the processes of the fiber testing devices at either the first end or second end and may be related to manual processes related to assistance from a technician or automatic processed related to sites where technician assistance is not required. In some embodiments, the systems and methods may be related to the multi-port testing system 39, 89, 99 and may comprise an optical switch 40, 90, 100 having a plurality of accessible terminations 16, 20, 42, 48 configured for connection with a first end of multiple strands of a fiber optic cable to be tested, where a second end of the multiple strands of the fiber optic cable terminates at a remote location. The multi-port testing system 39, 89, 99 may further include a test unit 44, 60, 66, 74 configured to cause the optical switch to switch among the multiple strands at the first end for testing connectivity. Also, the multi-port testing system 39, 89, 99 may include an interface device 46, 62, 70, 76 configured to communicate with the server 22, wherein the server is configured to coordinate the test unit with a second test unit at the remote location to enable one of the test unit and the second test unit to generate signals at one end of the strands and to detect presence of the signals at the other end of the strands. The test unit may further be configured to provide confirmation information to the server pertaining to the signals being generated or detected to enable the server to match the first end of the multiple strands with the second end of the multiple strands for determining fiber strand connectivity to create a connectivity map showing the fiber strand connectivity.

The test unit 44, 60, 66 may be configured to generate the signals and receive a notification from the server, via the interface device, when connectivity is detected at the remote location. The test unit may be configured to detect the presence of the signals generated at the remote location and provide a notification to the server, via the interface device, when the test unit detects connectivity on one of the multiple strands.

Also, the multi-port testing system 39, 89, 99 and/or portable test apparatus 38 may be arranged in a data center. The multi-port testing system may be arranged on a rack in the data center, wherein the interface device may be configured to provide geolocation information to the server, the geolocation information related to geographical data pertaining to the data center or even a location of the rack in the data center.

The optical switch may include input from a technician for selecting a strand of the multiple strands at the first end of the optical fiber cable. The test unit may be configured to provide test results to the technician. The test unit can be configured as a fiber tester, fault locator, visual fault locator, tone detector, or multimeter, wherein the interface device may be configured as a mobile device operated by the technician for communicating information to the server. The multi-port testing system can also include a database configured to store a list of available strands, wherein the test unit is configured to remove a strand from the list when connectivity of the strand is confirmed. Also, the signal can be detected by an Optical Time-Domain Reflectometry (OTDR) detecting a passive signature.

Although the present disclosure has been illustrated and described herein with reference to various embodiments and examples, it will be readily apparent to those of ordinary skill in the art that other embodiments and examples may perform similar functions, achieve like results, and/or provide other advantages. Modifications, additions, or omissions may be made to the systems, apparatuses, and methods described herein without departing from the spirit and scope of the present disclosure. All equivalent or alternative embodiments that fall within the spirit and scope of the present disclosure are contemplated thereby and are intended to be covered by the following claims.

## Claims

1. A method (200) for testing fiber strand connectivity of a fiber optic cable (12) running from a first site (32) to a second site (34), the fiber optic cable (12) having multiple strands (14, 18) terminating at the first and second sites (32, 34), the method (200) comprising steps of:
coordinating (202) the first and second sites (32, 34) to generate a signal at a first end of the strands (14) and to detect presence of the signal at a second end of the strands (18);
receiving (204) confirmation information from the first and second sites (32, 34) pertaining to the signal being generated and detected;
utilizing (206) the confirmation information to match the first end of the strands (14) with the second end of the strands (18) for determining fiber strand connectivity between the first site and the second site (32, 34); and
creating (208) a connectivity map showing the fiber strand connectivity.

2. The method (200) as claimed in claim 1, wherein the first end of the strands (14) includes a first set of accessible terminations (92), and the second end of the strands (18) includes a second set of accessible terminations (102).

3. The method (200) as claimed in claim 2, wherein the first and second sets of accessible terminations (92, 102) include ports, fiber connectors, or patch panel ports.

4. The method (200) as claimed in claim 2, wherein the steps further include:
identifying information regarding an identification of each of the first and second sets of accessible terminations (92, 102).

5. The method (200) as claimed in any one of claims 1 to 4, wherein the steps further include:
instructing the first site (32) to inject the signal onto a selected strand at the first end; and
instructing the second site (34) to scan a list of available strands at the second end and reply with a notification when the signal is detected on one of the available strands.

6. The method (200) as claimed in claim 5, wherein the steps further include:
informing the first site (32) to stop injecting the signal onto the selected strand and start injecting the signal onto a next strand; and
instructing the second site (34) to scan the list of available strands at the second end and reply with a notification when the signal is detected on another one of the available strands.

7. The method (200) as claimed in any one of claims 1 to 6, wherein the steps further include:
receiving geolocation information from each of the first site and second site (32, 34); and
incorporating the geolocation information into the connectivity map.

8. The method (200) as claimed in any one of claims 1 to 7, wherein the first site (32) receives assistance from a technician and the second site (34) does not receive assistance from a technician.

9. The method (200) as claimed in any one of claims 1 to 7, wherein neither the first site (32) nor the second site (34) receives assistance from a technician, and wherein the steps further include receiving a test initiation request from a remote technician to initiate a fiber strand connectivity test between the first site and the second site (32, 34).

10. A system comprising multi-port testing system (39, 89, 99) and computing device (130) configured to implement the method (200) as claimed in any one of claims 1 to 9.

11. The system as claimed in claim 10, wherein the multi-port testing system (39, 89, 99) includes:
an optical switch (40, 90, 100);
a test unit (44, 94, 104); and
an interface device (39, 89, 99) configured to communicate with the computing device (130).

12. The system as claimed in claim 11, wherein the computing device (130) is configured to coordinate the test unit (44, 94, 104) with a second test unit at the remote location.

13. The system as claimed in any one of claims 10 to 12, wherein the multi-port testing system (39, 89, 99) is arranged in a data center.

14. The system as claimed in claim 13, wherein the multi-port testing system (39, 89, 99) is arranged on a rack in the data center, and wherein the interface device is configured to provide geolocation information to the server, the geolocation information related to geographical data pertaining to one or more of a location of the rack in the data center and a site for the data center.

15. Computer code comprising instructions that, when executed, cause one or more processing devices (132) to implement the method (200) as claimed in any one of claims 1 to 10.
